# EUROPÄISCHE PATENTSCHRIFT

(11) **EP 3 002 265 B1**
(45) Veröffentlichungstag und Bekanntmachung des Hinweises auf die Patenterteilung: **27.09.2017**
(21) Anmeldenummer: 14187322.4
(22) Anmeldetag: 01.10.2014
(51) Int. Cl.: C04B 35/043, C04B 35/103, C04B 35/66, C04B 35/634, C04B 35/638

(54) **Versatz zur Herstellung eines feuerfesten Magnesiakohlenstofferzeugnisses oder eines feuerfesten Alumina-Magnesia-Kohlenstofferzeugnisses, ein Verfahren zur Herstellung eines solchen Erzeugnisses, ein solches Erzeugnis sowie die Verwendung eines solchen Erzeugnisses**
Mixture for producing a fire resistant magnesia carbon product or a fire resistant alumina magnesia carbon product, method for the production of such a product, such a product and the use of a product
Déport destiné à la fabrication d'un produit en carbone à la magnésie ou un produit en carbone - magnésie -aluminate, procédé de fabrication d'un tel produit, un tel produit et son utilisation

(43) Veröffentlichungstag der Anmeldung: 06.04.2016
(73) Patentinhaber: Refractory Intellectual Property GmbH & Co. KG, 1100 Wien (AT)
(72) Erfinder: Ebner, Clemens, 8020 Graz (AT); Neubauer, Bernd, 8700 Leoben (AT); Rief, Andreas, 8700 Leoben (AT); Trummer, Bernd, 8020 Graz (AT); Maranitsch, Alexander, 1100 Wien (AT)
(74) Vertreter: Berkenbrink, Kai-Oliver

(56) Entgegenhaltungen:
- EP-A1- 1 873 128
- JP-A- 2000 044 357
- US-A- 4 912 068
- US-A- 4 957 887
- US-A- 5 171 495
- US-A- 5 262 367
- US-A- 5 866 490
- BAG MOUSOM ED - MOUSOM BAG: "Development of Environment Friendly New Generation MgO-C Brick Using Nano Carbon", THESIS: DEVELOPMENT OF ENVIRONMENT FRIENDLY NEW GENERATION MGO-C BRICK USING NANO CARBON, ROURKELA, INDIA , 1. Dezember 2011 (2011-12-01), 1. Januar 2011 (2011-01-01), Seiten FP-73, XP002732633, Roukela, India Gefunden im Internet: URL:http://ethesis.nitrkl.ac.in/2896/1/mou som_thesis1.pdf [gefunden am 2014-11-18]
- KANNO K ET AL: "Mesophase pitch and phenolic resin blends as binders for magnesia-graphite bricks", CARBON, ELSEVIER, OXFORD, GB, Bd. 37, Nr. 2, 1. Februar 1999 (1999-02-01), Seiten 195-201, XP004481369, ISSN: 0008-6223, DOI: 10.1016/S0008-6223(98)00152-3
- ANEZIRIS C G ET AL: "Magnesia- Carbon-Bricks- A high-duty Refr. Material", INTERCERAM, SCHMID, FREIBURG, DE, 1 January 2003 (2003-01-01), pages 22-27, XP002477891, ISSN: 0020-5214

## Beschreibung

Die Erfindung betrifft einen Versatz zur Herstellung eines feuerfesten Magnesiakohlenstofferzeugnisses oder eines feuerfesten Alumina-Magnesia-Kohlenstofferzeugnisses sowie ein Verfahren zur Herstellung eines feuerfesten Magnesiakohlenstofferzeugnisses oder eines feuerfesten Alumina-Magnesia-Kohlenstofferzeugnisses aus dem Versatz.

Der Begriff "feuerfestes Erzeugnis" im Sinne der Erfindung bezeichnet insbesondere feuerfeste keramische Erzeugnisse mit einer Einsatztemperatur von über 600°C und bevorzugt feuerfeste Werkstoffe gemäß DIN 51060, also Werkstoffe mit einem Kegelfallpunkt größer SK17. Die Ermittlung des Kegelfallpunktes kann insbesondere gemäß DIN EN 993-12 erfolgen.

Ein Versatz bezeichnet bekanntermaßen eine Zusammensetzung aus einer oder mehreren Komponenten, durch die mittels einer Temperaturbehandlung, also insbesondere mittels eines Brandes, ein feuerfestes Erzeugnis herstellbar ist.

Feuerfeste Erzeugnisse sind auch in Form von Magnesiakohlenstofferzeugnissen, die auch als MgO-C-Erzeugnisse oder MgO-C-Steine bezeichnet werden, sowie in Form von feuerfesten Alumina-MagnesiaKohlenstofferzeugnissen, die auch als AMC-Erzeugnisse oder AMC-Steine bezeichnet werden, bekannt. Im gebrannten feuerfesten Magnesiakohlenstofferzeugnis und Alumina-Magnesia-Kohlenstofferzeugnis herrscht eine Kohlenstoffbindung vor, über die die Grundkomponente des Erzeugnisses miteinander verbunden ist. Bei manchen Erzeugnissen liegt auch eine Mischung aus Kohlenstoffbindung und keramischer Bindung vor (sogenannte CBMC-Steine, Ceramically Bonded MgO-C-Steine). Gegenüber reinen MgO-Erzeugnissen oder reinen Magnesia-Alumina-Erzeugnissen weisen sich Magnesiakohlenstofferzeugnisse und Alumina-MagnesiaKohlenstofferzeugnisse insbesondere durch verbesserte Verschleißeigenschaften sowie eine verbesserte Temperaturwechselbeständigkeit aus. Hierin werden Magnesiakohlenstofferzeugnisse und Alumina-MagnesiaKohlenstofferzeugnisse zusammenfassend auch als feuerfeste kohlenstoffgebundene Erzeugnisse bezeichnet.

Feuerfeste kohlenstoffgebundene Erzeugnisse werden aus Versätzen hergestellt, die Kohlenstoff enthaltende Komponenten umfassen, welche bei Temperaturbeaufschlagung eines solchen Versatzes eine Kohlenstoffbindung ausbilden.

Die wesentlichen Komponenten eines Versatzes zur Herstellung eines feuerfesten kohlenstoffgebundenen Erzeugnisses sind neben einer Grundkomponente eine Kohlenstoffkomponente in Form wenigstens eines Kohlenstoffträgers, beispielsweise Graphit, sowie wenigstens eine Bindemittelkomponente, die dem ungebrannten Versatz eine ausreichende Festigkeit verleiht. Daneben kann der Versatz weitere Komponenten umfassen, beispielsweise Antioxidantien in Form von Metallpulvern aus Aluminium oder Silizium, um eine Oxidation des Kohlenstoffs zu unterdrücken.

Bei der Grundkomponente eines Versatzes zur Herstellung eines feuerfesten Magnesiakohlenstofferzeugnisses handelt es sich um eine Magnesiakomponente in Form wenigstens eines Rohstoffes auf Basis MgO, beispielsweise um Sintermagnesia oder Schmelzmagnesia.

Bei der Grundkomponente eines Versatzes zur Herstellung eines feuerfesten Alumina-Magnesia-Kohlenstofferzeugnisses handelt es sich um eine Alumina-Magnesia-Komponente in Form wenigstens eines Rohstoffes auf Basis MgO oder Al₂O₃, beispielsweise Schmelzkorund, Sinterkorund, Bauxit, Magnesiaspinell, Sintermagnesia oder Schmelzmagnesia, wobei die Rohstoffe der Magnesia-Alumina-Komponente sowohl MgO als auch Al₂O₃ umfassen müssen.

Als Bindemittel für Versätze zur Herstellung von feuerfesten kohlenstoffgebundenen Erzeugnissen werden regelmäßig Pech oder Kunstharz verwendet.

Um den bei Raumtemperatur festen Pechen die zur Bindung der Komponenten des Versatzes notwendige Viskosität zu verleihen, werden Versätze mit Pech als Bindemittel, je nach Erweichungspunkt des Peches, bei Temperaturen im Bereich von 130°C bis 170°C gemischt.

Die mit Bindemittel angemachten Versätze werden anschließend zu Formteilen in Form von Grünkörpern gepresst und bei etwa 200°C getempert.

Die Aufheizung der getemperten Grünkörper zur Herstellung eines feuerfesten kohlenstoffgebundenen Erzeugnisses erfolgt üblicherweise im Betriebseinsatz.

Das sich bei der Verkokung des Pechs ausbildende, graphitische Kohlenstoffgerüst führt zu einer hohen Festigkeit bei einer gleichzeitig hohen Flexibilität des nach einem Brand hergestellten feuerfesten kohlenstoffgebundenen Erzeugnisses. Insoweit zeichnen sich feuerfeste Erzeugnisse, die aus einem Pech als Bindemittel umfassenden Versatz hergestellt worden sind, durch gute feuerfeste Eigenschaften aus. Probleme können allerdings die bei der Pyrolyse des Pechs freigesetzten Verbindungen bereiten, von denen insbesondere das Benzo-a-Pyren (C₂₀H₁₂, "BaP") als karzinogen gilt.

Vor diesem Hintergrund erweisen sich Kunstharze als Bindemittel für Versätze zur Herstellung von feuerfesten kohlenstoffgebundenen Erzeugnissen als vorteilhaft, da bei deren Pyrolyse kein Benzo-a-Pyren entweicht. Kunstharze als Bindemittel in Versätzen zur Herstellung von feuerfesten kohlenstoffgebundenen Erzeugnissen sind insbesondere in Form von Phenolharzen bekannt, also synthetischen Polykondensationsprodukten aus Phenol und Formaldehyd, die daher auch als Phenol-Formaldehydharze ("PF-Harze") bezeichnet werden. Bei der Anwendung und Erhitzung solcher Harze, insbesondere ab Temperaturen im Bereich von 200-700°C, kann es zur Bildung von geruchsbelästigenden oder gesundheitsgefährlichen Substanzen kommen, insbesondere beispielsweise aromatischen Substanzen, beispielsweise Phenol oder Phenolderivaten. Bei solchen Kunstharzen werden zwei grundlegende Kunstharztypen voneinander unterschieden. Zum einen existieren die sogenannten Resole (auch als "Resol-Harze" bezeichnet), die allein durch eine Temperaturerhöhung aushärten können. Zum anderen existieren sogenannte Novolake (auch als "Novolak-Harze" bezeichnet), die einen chemischen Härter, insbesondere Hexamethylentetramin, zum Aushärten benötigen. Resole sind in der Regel bei Raumtemperatur flüssig und härten bei einer Temperaturbeaufschlagung ab etwa 100°C selbsthärtend aus. Resole können daher unmittelbar als flüssige Bindemittelkomponente in Versätzen vorgesehen sein, ohne zuvor erhitzt oder in Lösungsmitteln gelöst werden zu müssen. Novolake sind bei Raumtemperatur fest. Die Verwendung von Novolaken als Bindemittel kann daher auf zwei Arten erfolgen: Zum einen in gelöster Form, wobei insbesondere organische Lösungsmittel zur Anwendung kommen, oder in Pulverform als sogenanntes Pulverharz. Möglich ist auch ein Aufschmelzen des Novolaks bei Temperaturen im Bereich von 70°C bis 100°C und die Verarbeitung des mit dem aufgeschmolzenen Novolak angemachten Versatzes im Heißbetrieb.

Auf Grund der starken räumlichen Vernetzung der Molekülketten des Kunstharzes kommt es bei seiner Verkokung zu keiner Graphitisierung des Kohlenstoffs, wodurch das aus einem solchen Versatz hergestellte feuerfeste kohlenstoffgebundene Erzeugnis eine geringere Festigkeit und Flexibilität gegenüber einem solchen feuerfesten kohlenstoffgebundenen Erzeugniss aufweisen kann, das auf Basis eines Versatzes mit Pech als Bindemittel hergestellt worden ist.

Vorteilhaft an der Verwendung von Pech als Bindemittel in Versätzen zur Herstellung eines feuerfesten kohlenstoffgebundenen Erzeugnissen ist daher, dass die hieraus hergestellten feuerfesten kohlenstoffgebundenen Erzeugnissen in der Regel sehr gute feuerfeste Eigenschaften aufweisen. Nachteilig kann allerdings das während der Pyrolyse entstehende flüchtige Benz-a-Pyren sein.

Vorteilhaft an der Verwendung von Kunstharzen als Bindemittel in Versätzen zur Herstellung von feuerfesten kohlenstoffgebundenen Erzeugnissen ist unter anderem, dass bei deren Pyrolyse in der Regel kein Benzo-a-Pyren freigesetzt wird. Allerdings kann es bei der Erhitzung von Kunstharzen umfassenden Versätzen, insbesondere beim Erhitzen auf Einsatztemperaturen, zu Entstehung von anderen geruchsbelästigenden oder gesundheitsgefährdenden Substanzen kommen. Ferner können sich die aus einem solchen Versatz hergestellten feuerfesten Erzeugnisse hinsichtlich ihrer feuerfesten Eigenschaften gegenüber solchen Erzeugnissen, die auf Basis eines Versatzes mit Pech als Bindemittel hergestellt worden sind, als schlechter erweisen.

In EP 1 704 128 B1 wird ein Verfahren bereitgestellt, durch welches kohlenstoffgebundene Feuerfesterzeugnisse mit Benzo-a-Pyren-Gehalten unter 50 mg/kg herstellbar sein sollen. Hierzu wird vorgeschlagen, als Bindemittel zum einen Steinkohlenteerpech mit einem Benzo-a-Pyren-Gehalt kleiner 500 mg/kg und zum anderen eine flüssige Lösung dieses Steinkohlenteerpechs in einem hocharomatischen Öl zu verwenden.

Aneziris C.G. et al ("Magnesia-Carbon Bricks - A High-Duty Refractory Material", Interceram, Schmid, Freiburg, DE, 1. Januar 2003, Seiten 22-27), beschreiben einen Versatz, der folgende Komponenten umfasst: Eine Grundkomponente aus Sintermagnesia und Schmelzmagnesia, 2-3 % einer Bindemittelkomponente in Form eines flüssigen Harzes, 0,5-1,5 % einer Bindemittelkomponente in Form von Carbores P und eine Kolilenstoffkompenente in Form von Graphit oder Ruß.

Der Erfindung liegt die Aufgabe zu Grunde, einen Versatz zur Herstellung eines feuerfesten kohlenstoffgebundenen Erzeugnisses zur Verfügung zu stellen, der ein verkokbares Bindemittel aufweist, bei dessen Pyrolyse flüchtige, gesundheitsgefährdende Stoffe nicht oder nur in geringem Maße freigesetzt werden und aus dem gleichzeitig ein feuerfestes kohlenstoffgebundenes Erzeugnis mit solchen feuerfesten Eigenschaften herstellbar ist, das den feuerfesten Eigenschaften eines feuerfesten kohlenstoffgebundenen Erzeugnisses, das auf Basis eines Versatzes nach dem Stand der Technik hergestellt worden ist, zumindest ebenbürtig ist.

Eine weitere Aufgabe der Erfindung ist, einen Versatz zur Herstellung eines feuerfesten kohlenstoffgebundenen Erzeugnisses zur Verfügung zu stellern, der einfach verarbeitbar ist.

Eine weitere Aufgabe der Erfindung ist es, ein feuerfestes kohlenstoffgebundenes Erzeugnis mit guten feuerfesten Eigenschaften zur Verfügung zu stellen.

Eine weitere Aufgabe der Erfindung besteht darin, ein Verfahren zur Herstellung eines solchen feuerfesten kohlenstoffgebundenen Erzeugnisses zur Verfügung zu stellen.

Erfindungsgemäß zur Verfügung gestellt wird ein Versatz zur Herstellung eines feuerfesten kohlenstoffgebundenen Erzeugnisses, umfassend die folgenden Komponenten in den folgenden Massenanteilen, jeweils bezogen auf die Gesamtmasse des Erzeugnisses:
- 70 bis 97 Masse-% einer Grundkomponente;
- 1,0 bis 2,3 Masse-% einer Bindemittelkomponente in Form wenigstens eines Resols;
- 1,0 bis 3,0 Masse-% einer Bindemittelkomponente in Form wenigstens eines Pechs;
- 1,0 bis 28 Masse-% einer Kohlenstoffkomponente in Form wenigstens eines Kohlenstoffträgers; und den weiteren Merkmalen gemäß Anspruch 1.

Überraschend wurde erfindungsgemäß festgestellt, dass aus einem Versatz, der die vorbezeichneten Komponenten in den vorbezeichneten Massenanteilen umfasst, ein feuerfestes kohlenstoffgebundenen Erzeugnis mit hervorragenden feuerfesten Eigenschaften herstellbar ist, wobei aufgrund der Bindemittelzusammensetzung bei deren Pyrolyse ein Entweichen von gesundheitsgefährdenden, flüchtigen Bestandteilen in erheblichen Anteilen vermeidbar ist. Dies liegt insbesondere auch an den verhältnismäßig geringen Anteilen der Bindemittelkomponente in Form des wenigstens einen Resols, wobei die sich jeweils vorteilhaften Eigenschaften der Bindemittelkomponenten in Form des wenigstens einen Resols und des wenigstens einen Pechs in den spezifischen, erfindungsgemäßen Anteilen einander ergänzen.

Generell ist bei aus erfindungsgemäßen Versätzen hergestellten Formkörpern von einem maximalen Gesamtgewichtsverlust im Temperaturbereich zwischen 200 und 700°C gemäß Thermogravimetrie von 1,5 Massen-% und von einer daraus abgeleiteten Abdampfrate von 150 ppm/min auszugehen.

Die hierin gemachten Anteile in Masse-% sind bezogen auf die Gesamtmasse des Versatzes, soweit im Einzelfall nicht anders angegeben.

Besonders bevorzugt liegt die Bindemittelkomponente im Form des wenigstens einen Pechs in Form von Festpech vor, insbesondere in Form eines Festpechs in Form von Steinkohlenteerpech. Bevorzugt liegt das Pech hoch erweichend vor, bevorzugt mit einem Erweichungspunkt über 200°C. Bevorzugt weist das Pech eine oder mehrere der nachfolgend aufgeführten Eigenschaften auf, wobei die Angaben bezogen sind auf das jeweilige Pech:
- Erweichungspunkt über 200°C;
- Benzo-a-Pyren-Gehalt unter 500 ppm, beispielsweise 300 bis 500 ppm;
- Verkokungsrückstand nach Conradson (gemäß DIN 51551-1:2009-04) > 75 Masse-% oder > 80 Masse-%;
- Korngröße D50 im Bereich von 35 bis 70 µm,
- Trockenverlust < 0,5 Masse-% (bei 110°C);
- Gehalt an Asche < 0,4 Masse-%.
Nach einer bevorzugten Ausführungsform kann es sich bei der Bindemittelkomponente in Form des wenigstens einen Pechs um ein modifiziertes Steinkohlenteerpech handeln, das das Unternehmen Rütgers Basic Aromatics GmbH unter dem Handelsnamen CARBORES P vertreibt.

Bei der Bindemittelkomponente in Form des wenigstens einen Pechs kann es sich um ein oder mehrere Peche handeln, wobei bevorzugt jedes der Peche eine oder mehrere der vorbezeichneten Eigenschaften aufweist.

Die Bindemittelkomponente in Form des wenigstens einen Pechs kann mit einem Anteil von 1,0 bis 3,0 Masse-% in dem erfindungsgemäßen Versatz vorliegen, also beispielsweise auch mit einem Anteil von mindestens 1,1 oder 1,2 oder 1,3 oder 1,4 oder 1,5 Masse-% und beispielsweise auch höchstens mit einem Anteil von 2,9 oder 2,8 oder 2,7 oder 2,6 oder 2,5 Masse-%.

Die Bindemittelkomponente in Form des wenigstens einen Resols kann eines oder mehrere Resole umfassen. Bekanntermaßen sind Resole lösliche Phenoplaste, die reaktive Methylolgruppen enthalten. Bevorzugt weisen die Resole eine oder mehrere der nachfolgend aufgeführten Eigenschaften auf, wobei die Angaben bezogen sind auf das jeweilige Resol:
- Verkokungsrückstand > 39 Masse-% (bestimmt gemäß dem Verfahren nach Conradson gemäß DIN 51551-1: 2009-04);
- Wassergehalt < 20 Masse-%, beispielsweise 6 - 20 Masse-%;
- Gehalt an freiem Phenol <15 Masse-%, beispielsweise 5 - 15 Masse-%;
- Nichtflüchtiger Anteil > 70 Masse-%, beispielsweise 70 - 80 Masse-%;
- Dynamische Viskosität bei 25°C: 180 - 1.400 mPas;
- Gelzeit bei 132°C: 130 - 150 Sekunden.
Soweit die Bindemittelkomponente in Form des wenigstens einen Resols mehrere Resole umfasst, weist bevorzugt jedes der Resole eine oder mehrere der vorbezeichneten Eigenschaften auf.

Die Bindemittelkomponente in Form des wenigstens einen Resols liegt in einem Anteil von 1,0 bis 2,3 Masse-% im Versatz vor, also beispielsweise auch in einem Anteil von wenigstens 1,1 oder 1,2 oder 1,3 oder 1,4 oder 1,5 Masse-% und beispielsweise auch in einem Anteil von höchstens 2,2 oder 2,1 oder 2,0 Masse-%.

Wie zuvor ausgeführt, ergeben sich die angeführten, vorteilhaften Eigenschaften des Versatzes in der Regel nur dann, wenn die Komponenten des Versatzes, insbesondere die Bindemittelkomponenten, in den erfindungsgemäßen Anteilen im Versatz vorliegen. Dabei wurde erfindungsgemäß festgestellt, dass nicht nur die absoluten Werte der Bindemittelkomponenten, sondern auch deren Masseverhältnisse zueinander von Bedeutung sein können. Insoweit ist vorgesehen, dass das Massenverhältnis der Bindemittelkomponente in Form des wenigstens einen Resols zur Bindemittelkomponente in Form des wenigstens einen Pechs im Bereich von 0,5 bis 1,5 liegt, insbesondere im Bereich von 0,6 bis 1,4.

Die Grundkomponente des erfindungsgemäßen Versatzes besteht aus einer Magnesiakomponente oder einer Alumina-Magnesia-Komponente. Soweit die Grundkomponente aus einer Magnesiakomponente besteht, dient der Versatz zu Herstellung eines feuerfesten Magnesiakohlenstofferzeugnisses, und soweit die Grundkomponente aus einer Alumina-Magnesia-Komponente besteht, dient der Versatz zu Herstellung eines feuerfesten Alumina-Magnesia-Kohlenstofferzeugnisses.

Der erfindungsgemäße Versatz weist eine Grundkomponente in einem Anteil von 70 bis 97 Masse-% auf, also beispielsweise auch in einem Anteil von wenigstens 72, 74, 76, 78, 80, 81, 82, 83, 84 oder 85 Masse-% und beispielsweise auch höchstens in einem Anteil von 96 oder 95 Masse-%.

Soweit die Grundkomponente des erfindungsgemäßen Versatzes aus einer Magnesiakomponente besteht, kann diese einen oder mehrere Rohstoffe auf Basis MgO umfassen, die Versätze zur Herstellung eines feuerfesten Magnesiakohlenstofferzeugnisses nach dem Stand der Technik aufweisen können. Insoweit kann eine Magnesiakomponente beispielsweise in Form wenigstens eines der folgenden Rohstoffe auf Basis MgO vorliegen: Schmelzmagnesia oder Sintermagnesia.

Soweit die Grundkomponente des erfindungsgemäßen Versatzes aus einer Alumina-Magnesia-Komponente besteht, kann diese einen oder mehrere Rohstoffe auf Basis MgO oder Al₂O₃ umfassen, die Versätze zur Herstellung eines feuerfesten Alumina-Magnesia-Kohlenstofferzeugnisses nach dem Stand der Technik aufweisen können. Insoweit kann eine Alumina-Magnesia-Komponente beispielsweise in Form wenigstens eines der folgenden Rohstoffes auf Basis MgO oder Al₂O₃ vorliegen: Schmelzkorund, Sinterkorund, Bauxit, Magnesiaspinell, Sintermagnesia oder Schmelzmagnesia, wobei die Rohstoffe der Magnesia-Alumina-Konmponente sowohl MgO als auch Al₂O₃ umfassen. Insofern kann die Magnesia-Alunmina-Komponente beispielsweise allein Magnesiaspinell als Rohstoff umfassen, da dieser sowohl MgO als auch Al₂O₃ umfasst. Beispielsweise kann die Magnesia-Alumina-Komponente alternativ Schmelzkorund und Schmelzmagnesia umfassen, da diese Rohstoffe zum einen aus Al₂O₃, zum anderen aus MgO gebildet sind.

Gemäß dem Stand der Technik ist es in einigen Fällen notwendig, zur Herstellung von feuerfesten kohlenstoffgebundenen Erzeugnissen Bindemittel in Form wenigstens eines Novolaks zu verwenden. Wie oben ausgeführt, benötigen Novolake zur Härtung einen Härter, insbesondere in Form von Hexamethylentetramin. Problematisch bei der Verwendung von Hexamethylentetramin als Härter ist jedoch, dass dieser bei Temperaturen ab etwa 100°C Formaldehyd abzuspalten beginnt, was unter gesundheitlichen Aspekten nachteilig ist. Erfindungsgemäß hat sich nunmehr rausgestellt, dass die Verwendung von Novolaken in dem erfindungsgemäßen Versatz nicht notwendig ist. Insoweit kann erfindungsgemäß vorgesehen sein, dass der erfindungsgemäße Versatz keine Anteile an einer Bindemittelkomponente in Form wenigstens eines Novolaks umfasst, zumindest jedoch Anteile an Novolaken unter 0,5 Masse-%, insbesondere unter 0,4 oder 0,3 oder 0,2 oder unter 0,1 Masse-%. Die Kohlenstoffkomponente liegt in Form wenigstens eines der folgenden Kohlenstoffträger vor: Graphit oder Ruß.

Die Kohlenstoffkomponente in Form des wenigstens einen Kohlenstoffträgers kann in Anteilen von 1,0 bis 28 Masse-% im Versatz vorliegen, also beispielsweise auch in Anteilen von wenigstens 2, 3, 4 oder 5 Masse-% und beispielsweise auch in Anteilen von höchstens 27, 26, 25, 24, 23, 22, 21, 20, 19 oder 18 Masse-%.

Als weitere Komponente kann der erfindungsgemäße Versatz beispielsweise eine Komponente in Form einer oder mehrer Antioxidantien umfassen, beispielsweise in Form wenigstens eines der folgenden Antioxidantien: Aluminiumpulver, Siliziumpulver, Pulver aus Aluminium-Magnesium-Legierungen, Carbide oder Boride.

Es kann vorgesehen sein, dass der erfindungsgemäße Versatz neben den vorbezeichneten Komponenten, also einer Magnesiakomponente in Form wenigstens eines Rohstoffes auf Basis MgO, einer Bindemittelkomponente in Form wenigstens eines Resols, einer Bindemittelkomponente in Form wenigstens eines Pechs, einer Kohlenstoffkomponente in Form wenigstens eines Kohlenstoffträgers sowie einer Komponente in Form von Antioxidantien keine weiteren Komponenten umfasst oder allenfalls in Anteilen unter 5 Masse-%, also beispielsweise auch in Anteilen unter 4, 3, 2 oder unter 1 Masse-%.

Der Versatz kann erfindungsgemäß zur Herstellung eines beliebigen feuerfesten kohlenstoffgebundenen Erzeugnisses verwendet werden, bevorzugt zur Herstellung eines feuerfesten Magnesiakohlenstoffsteines, also eines sogenannten MgO-C-Steines, oder eines feuerfesten Alumina-Magnesia-Steines, also eines sogenannten AMC-Steines.

Gemäß dem erfindungsgemäßen Verfahren zur Herstellung eines feuerfesten kohlenstoffgebundenen Erzeugnisses umfasst dieses die folgenden Verfahrensschritte:
- Zur Verfügungstellung eines erfindungsgemäßen Versatzes;
- Formen des Versatzes zu einem Formkörper;
- Tempern des Formkörpers;
- Beaufschlagung des getemperten Formkörpers mit Temperatur derart, dass der Kohlenstoff der Bindemittelkomponenten sowie der Kohlenstoffkomponente zur Ausbildung eines feuerfesten kohlenstoffgebundenen Erzeugnisses eine Kohlenstoffbindung ausbildet.

Das Formen, Tempern und Temperaturbeaufschlagen kann gemäß dem Stand der Technik erfolgen.

Bevorzugt wird der Versatz durch Pressen zu einem Formkörper geformt. Ein solcher Formkörper wird auch als Grünkörper bezeichnet.

Der Formkörper beziehungsweise Grünkörper wird anschließend, insbesondere zur Erzielung einer ausreichenden Grünfestigkeit, getempert. Das Tempern kann bevorzugt bei Temperaturen im Bereich von 150 bis 250°C erfolgen, insbesondere bei etwa 200°C.

Gemäß der Stand der Technik wird der getemperte Formkörper anschließend derart mit Temperatur beaufschlagt, dass der Kohlenstoff der Bindemittelkomponenten und insbesondere auch der Kohlenstoffkomponente eine Kohlenstoffbindung ausbildet, so dass nach der Temperaturbeaufschlagung ein feuerfestes kohlenstoffgebundenes Erzeugnis erhalten wird.

Diese weitere Temperaturbeaufschlagung kann gemäß dem Stand der Technik erfolgen, also insbesondere bei den aus dem Stand der Technik bekannten Temperaturen und bei der aus dem Stand der Technik bekannten Atmosphäre. Insoweit kann die Temperaturbeaufschlagung beispielsweise bei Temperaturen im Bereich von 1.400°C bis 1.700°C und bei reduzierender Atmosphäre erfolgen.

Wie aus dem Stand der Technik bekannt, kann die Temperaturbeaufschlagung des getemperten Formkörpers insbesondere im Einsatz des Versatzes erfolgen, also beim Aufheizen des Aggregates, der mit dem erfindungsgemäßen Versatz zugestellt ist. Gegenstand der Erfindung ist auch ein feuerfestes kohlenstoffgebundenes Erzeugnis, das durch ein erfindungsgemäßes Verfahren hergestellt ist.

Das erfindungsgemäße feuerfeste kohlenstoffgebundene Erzeugnis weist Partikel beziehungsweise Körner der feuerfesten Grundkomponente - also der Magnesiakomponente oder der Alumina-Magnesia-Komponente - auf, die über eine Kohlenstoffbindung, die aus den Bindemittelkomponenten und der Kohlenstoffkomponente bei der Temperaturbeaufschlagung gebildet wurde, gebunden sind. Es kann auch vorgesehen sein, dass die Körner der Magnesiakomponente oder der Alumina-Magnesia-Komponente zumindest teilweise direkt miteinander versintert sind.

Das erfindungsgemäße feuerfeste kohlenstoffgebundene Erzeugnis kann beispielsweise Anteile an den folgenden Oxiden in den nachfolgend angegebenen Massenanteilen aufweisen, jeweils bezogen auf die Gesamtmasse des feuerfesten kohlenstoffgebundenen Erzeugnisses, wobei diese Anteile jeweils einzeln oder in Kombination vorliegen können:
(1) soweit das feuerfeste kohlenstoffgebundene Erzeugnis in Form eines Magnesiakohlenstofferzeugnisses vorliegt und insoweit auf Basis einer Grundkomponente in Form einer Magnesiakomponente hergestellt wurde:

| | |
|---|---|
| MgO: | mindestens 70 Masse-%; |
| Kohlenstoff: | 3 - 30 Masse-%, also beispielsweise auch 5 - 20 Masse-%; |
| Al₂O₃: | < 10 Masse-%, also beispielsweise auch < 8 Masse-% oder 0,1 - 8 Masse-%; |
| Fe₂O₃: | < 2 Masse-%, also beispielsweise auch < 1 Masse-% oder 0,1 - 1 Masse-%; |
| CaO: | < 3 Masse-%, also beispielsweise auch < 2 Masse-% oder 1,0 bis 2,0 Masse-%; |
| SiO₂: | < 3 Masse-%, also beispielsweise auch < 2 Masse-% oder 0,1 - 2 Masse-%. |

(2) soweit das feuerfeste kohlenstoffgebundene Erzeugnis in Form eines Alumina-Magnesia-Kohlenstofferzeugnisses vorliegt und insoweit auf Basis einer Grundkomponente in Form einer Alumina-Magnesia-Komponente hergestellt wurde:

| | |
|---|---|
| Al₂O₃: | 50 - 98 Masse-%, also beispielsweise auch 60 - 90 Masse-%; |
| Kohlenstoff: | 1 - 30 Masse-%, also beispielsweise auch 5 - 20 Masse-%; |
| MgO: | 1 - 49 Masse-%, also beispielsweise auch 1 - 40 Masse-%; |
| Fe₂O₃: | < 2 Masse-%, also beispielsweise auch < 1 Masse-% oder 0,1 - 1 Masse-%; |
| CaO: | < 3 Masse-%, also beispielsweise auch < 2 Masse-% oder 1,0 bis 2,0 Masse-%; |
| SiO₂: | < 6 Masse-%, also beispielsweise auch < 5 Masse-%, < 4 Masse-%, < 3 Masse-%, < 2 Masse-% oder 0,1 - 2 Masse-%. |

Grundsätzlich kann das erfindungsgemäße feuerfeste kohlenstoffgebundene Erzeugnis einer beliebigen gewünschten Anwendung für feuerfeste kohlenstoffgebundene Erzeugnisse zugeführt werden. Besonders bevorzugt wird das erfindungsgemäße feuerfeste kohlenstoffgebundene Erzeugnis in der Stahlindustrie verwendet, besonders bevorzugt zur Auskleidung von Gefäßen zur Aufnahme einer Stahlschmelze. Insoweit ist auch Gegenstand der Erfindung die Verwendung des erfindungsgemäßen feuerfesten kohlenstoffgebundenen Erzeugnisses zur Auskleidung von Sauerstoffblaskonvertern, Elektrolichtbogenöfen, Stahlpfannen oder für Schieberverschlüsse.

Weitere Merkmale der Erfindung ergeben sich aus den Ansprüchen, den Figuren, der zugehörigen Figurenbeschreibung sowie den nachfolgend dargestellten Ausführungsbeispielen.

Sämtliche Merkmale der Erfindung können, einzeln oder in Kombination, beliebig miteinander kombiniert sein.

In der nachfolgenden Tabelle 1 sind drei Ausführungsbeispiele erfindungsgemäßer Versätze angegeben, die mit V1, V2 und V3 bezeichnet sind. Ferner sind in Tabelle 1 drei Versätze nach dem Stand der Technik angegeben, die mit S1, S2 und S3 bezeichnet sind. Dabei handelt es sich bei den Versätzen V1, V2, S1 und S2 um Versätze mit einer Grundkomponente in Form von Schmelzmagnesia und somit um Versätze zur Herstellung eines Magnesiakohlenstofferzeugnisses; demgegenüber handelt es sich bei den Versätzen V3 und S3 um Versätze mit einer Grundkomponente in Form von Schmelzmagnesia und Schmelzalumina und somit um Versätze zur Herstellung eines Alumina-Magnesia-Kohlenstofferzeugnisses.

**Tabelle 1**

| Komponente | V1 | V2 | V3 | S1 | S2 | S3 |
|---|---|---|---|---|---|---|
| Schmelzmagnesia | 88,0 | 91,5 | 4,0 | 88,2 | 91,7 | 4,0 |
| Schmelzalumina | | | 87,5 | | | 87,2 |
| Resol | 1,5 | 2,3 | 2,3 | 2,8 | 2,8 | 3,0 |
| Novolak + HMT* | | | | | | 1,3 |
| Festpech | 2,5 | 1,7 | 1,7 | 1,0 | 1,0 | |
| Graphit | 8,0 | 4,5 | 4,5 | 8,0 | 4,5 | 4,5 |

| | | | | | | |
|---|---|---|---|---|---|---|
| *HMT= Hexamethylentetramin | | | | | | |

Die vorgemachten Angaben sind Angaben in Masse-%, bezogen auf die jeweilige Gesamtmasse des Versatzes.

Die Schmelzmagnesia lag in einer Korngröße von > 0 bis 6 mm vor. Der Anteil an MgO der Schmelzmagnesia betrug 97,4 Masse-%, bezogen auf die Schmelzmagnesia. Daneben wies die Schmelzmagnesia Anteile an den folgenden Oxiden auf, jeweils bezogen auf die Gesamtmasse der Schmelzmagnesia: CaO: 1,2 Masse-%; SiO₂: 0,5 Masse-%; Fe₂O₃: 0,8 Masse-%; Al₂O₃: 0,1 Masse-%. Die Rohdichte der Schmelzmagnesia betrug 3,47 g/cm³.

Die Schmelzalumina lag in einer Korngröße von > 0 bis 7 mm vor. Der Anteil an Al₂O₃ betrug 99,6 Masse-%, bezogen auf die Schmelzalumina. Daneben wies die Schmelzalumina Anteile an den folgenden Oxiden auf, jeweils bezogen auf die Gesamtmasse der Schmelzalumina: SiO₂: 0,06 Masse-%; CaO: 0,03 Masse-%; Fe₂O₃: 0,09 Masse-%; MgO: 0,08 Masse-%; TiO₂: 0,01 Masse-%; Na₂O: 0,16 Masse-%. Die Rohdichte der Schmelzalumina betrug 3,65 g/cm³.

Die Bindemittelkomponente in Form des Resols wies die folgenden Eigenschaften auf: 12,4 Masse-% freies Phenol (gemäß DIN EN ISO 8974); Kohlenstoffausbeute nach Conradson (gemäß DIN 51551-1:2009-04): 40 Masse-%; nicht flüchtige Anteile bei 135°C (gemäß DIN EN ISO 3251): 71 Masse-%; Wassergehalt nach Karl Fischer (gemäß DIN 53715): 11 Masse-%; B-Zeit bei 150°C (gemäß DIN EN ISO 8978): 150 s; Viskosität nach Höppler bei 20°C (gemäß DIN EN ISO 12058-1): 530 mPaS.

Bei der Bindemittelkomponente in Form des modifizierten Steinkohlenteerpechs handelte es sich um ein handelsübliches Festpech mit einem Erweichungspunkt von 235°C (gemäß DIN 51920:2012-12), einem Verkokungsrückstand nach Conradson (gemäß DIN 51551-1:2009-04) > 80 Masse-%, einem Benzo-a-Pyren-Gehalt von < 500 ppm, einer Korngröße D50 im Bereich von 35 - 70µm, einem Trockenverlust (bei 110°C; gemäß DIN 51078:2002-12) < 0,5 Masse-% sowie einem Ascheanteil < 0,4 Masse-%.

Der Kohlenstoffträger in Form des Graphits lag in einer Korngröße < 1,0 mm und mit einem Kohlenstoffgehalt von > 94 Masse-%, bezogen auf den Kohlenstoffträger, vor.

Die entsprechend erstellten Versätze wurden bei Raumtemperatur gemischt und mittels einer hydraulischen Presse bei einem Pressdruck im Bereich von 100 bis 300 MPa zu Formkörpern in Form von ungebrannten Magnesiakohlenstofferzeugnissen des Formats 230 x 114 x 70 mm geformt. Im Anschluss an die Formgebung wurden die Formkörper bei einer Temperatur von 200°C bei einer Aufheizrate von 50°C/h für 6 h zur Aushärtung der Resolharzkomponente beziehungsweise der Novolakkomponente thermisch behandelt ("getempert"). Die so hergestellten, getemperten, unbgebrannten Formkörper (nachstehend "Erzeugnisse") wurden anschließend ohne weitere Behandlung der Charakterisierung mittels Thermogravimetrie (TGA; gemäß DIN 51006:2005-07) und Pyrolyse in der Gaschromatographie unterworfen.

Das für die TGA verwendete Prüfgerät war ein Gerät des Typs "TA06" des Unternehmens Mettler-Toledo.

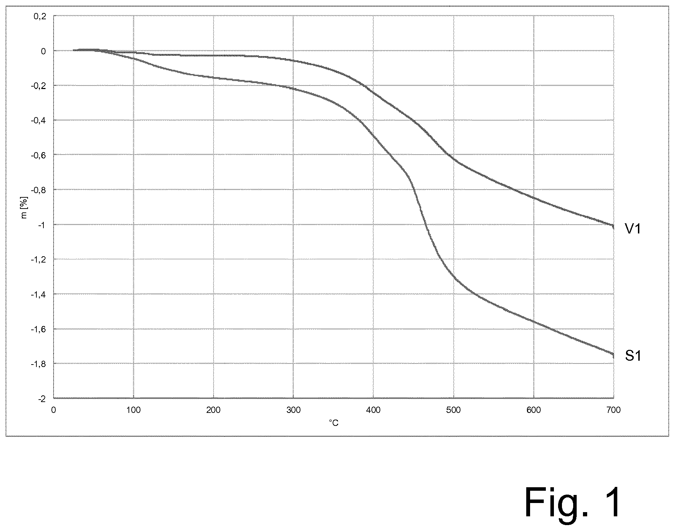

Für die TGA wurden aus den oben genannten Erzeugnissen würfelförmige Proben mit einer Kantenlänge von 12 mm geschnitten und unter Sauerstoffausschluss und in einer Stickstoffatmosphäre bei einer Aufheizrate von 2°C/min auf eine Endtemperatur von 700°C erhitzt. Bei dieser Untersuchung kam es zunächst zu einer Verdampfung flüchtiger Bestandteile wie beispielsweise Wasser und freiem Phenol im Temperaturbereich bis etwa 200/300°C. Im folgenden Temperaturbereich von 300 bis 700 °C kam es zu einer pyrolytischen Zersetzung des Resols beziehungsweise des Novolaks bei gleichzeitiger Ausbildung eines Kohlenstoffgerüstes und Freisetzung von thermischen Spaltprodukten des Rosolharzes beziehungsweise des Novolaks, wie beispielsweise Phenol, ortho-, meta- und para-Kresol, verschiedenen Xylenolen und Trimethylphenol. Während der Erhitzung der Proben wurden der Gesamtgewichtsverlust sowie die Abdampfrate der flüchtigen Bestanteile quantifiziert. Die sich daraus ergebenden Messwerte sind in Figur 1, 2, 3, 4, 5 und 6 dargestellt.
Figur 1 zeigt den mittels TGA gemessenen Gesamtgewichtsverlust der Proben der Erzeugnisse aus den Versätzen V1 und S1. Dabei ist auf der Y-Achse der Gesamtmassenverlust in Masse-% in Abhängigkeit von der Temperatur in °C gemäß X-Achse angegeben. Die Kurven bei 700 °C zeigen von oben nach unten die Werte für die aus den Versätzen V1 und S1 hergestellten Erzeugnisse. Anhand Figur 1 ist deutlich erkennbar, dass der Gesamtgewichtsverlust des aus dem erfindungsgemäßen Versatz V1 hergestellten Erzeugnisses V1 deutlich geringer ist als jener des aus nach dem Stand der Technik entsprechenden Versatz S1 hergestellten Erzeugnisses.

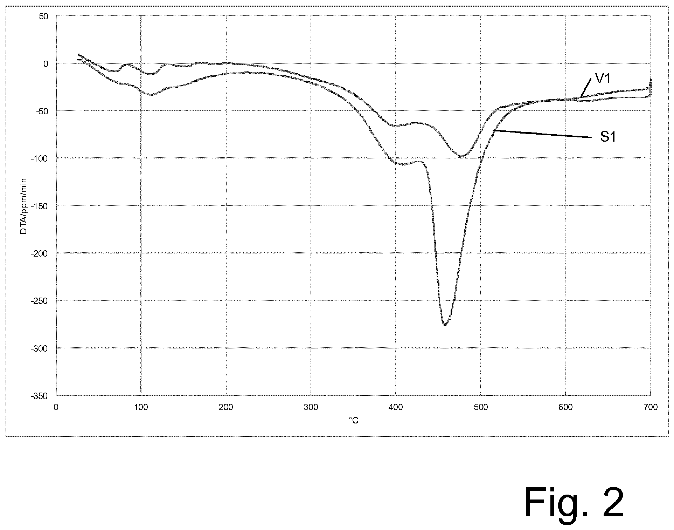

Figur 2 zeigt die aus der TGA abgeleiteten Abdampfraten der Proben der Erzeugnisse aus den Versätzen V1 und S1. Dabei ist auf der Y-Achse die Abdampfrate in ppm/min in Abhängigkeit von der Temperatur in °C gemäß X-Achse angegeben. Die Kurven bei 450 °C zeigen von oben nach unten die Werte für die aus den Versätzen V1 und S1 hergestellten Erzeugnisse. Deutlich zu erkennen sind auch hier die wesentlich geringeren Abdampfraten des aus dem erfindungsgemäßen Versatz V1 hergestellten Erzeugnisses V1 (-100 ppm) gegenüber dem Erzeugnis S1 (-298 ppm), welches aus dem Versatz nach dem Stand der Technik gemäß S1 hergestellt wurde.

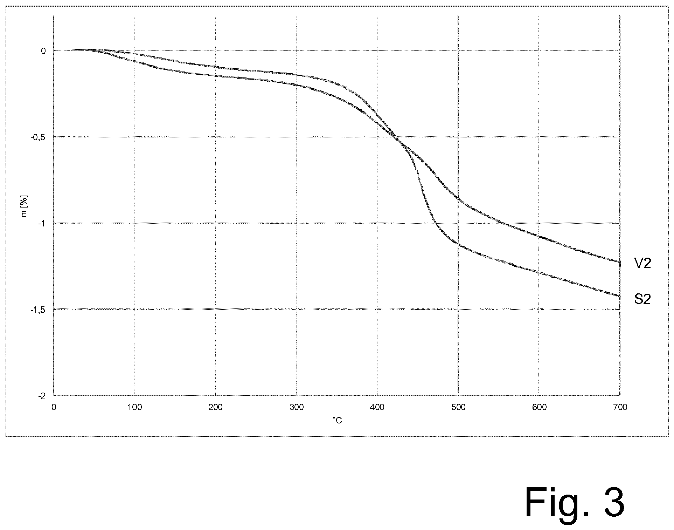

Figur 3 zeigt den mittels TGA gemessenen Gesamtgewichtsverlust der Proben der Erzeugnisse aus den Versätzen V2 und S2. Dabei ist auf der Y-Achse der Gesamtmassenverlust in Masse-% in Abhängigkeit von der Temperatur in °C gemäß X-Achse angegeben. Die Kurven bei 700 °C zeigen von oben nach unten die Werte für die aus den Versätzen V2 und S2 hergestellten Erzeugnisse. Anhand Figur 3 ist deutlich erkennbar, dass der Gesamtgewichtsverlust des aus dem erfindungsgemäßen Versatz V2 hergestellten Erzeugnisses V2 deutlich geringer ist als jener des aus nach dem Stand der Technik entsprechenden Versatz S2 hergestellten Erzeugnisses.

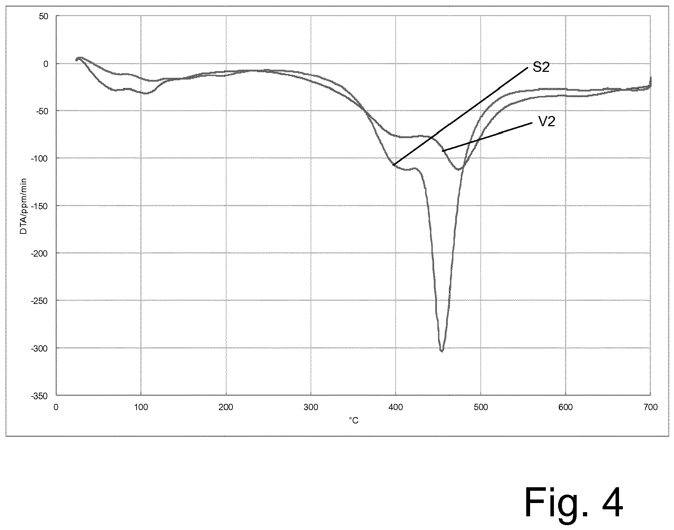

Figur 4 zeigt die aus der TGA abgeleiteten Abdampfraten der Proben der Erzeugnisse aus den Versätzen V2 und S2. Dabei ist auf der Y-Achse die Abdampfrate in ppm/min in Abhängigkeit von der Temperatur in °C gemäß X-Achse angegeben. Die Kurven bei 450 °C zeigen von oben nach unten die Werte für die aus den Versätzen V2 und S2 hergestellten Erzeugnisse. Deutlich zu erkennen sind auch hier die wesentlich geringeren Abdampfraten des aus dem erfindungsgemäßen Versatz V2 hergestellten Erzeugnisses V2 (-115 ppm) gegenüber dem Erzeugnis S2 (-317 ppm), welches aus dem Versatz nach dem Stand der Technik gemäß S2 hergestellt wurde.

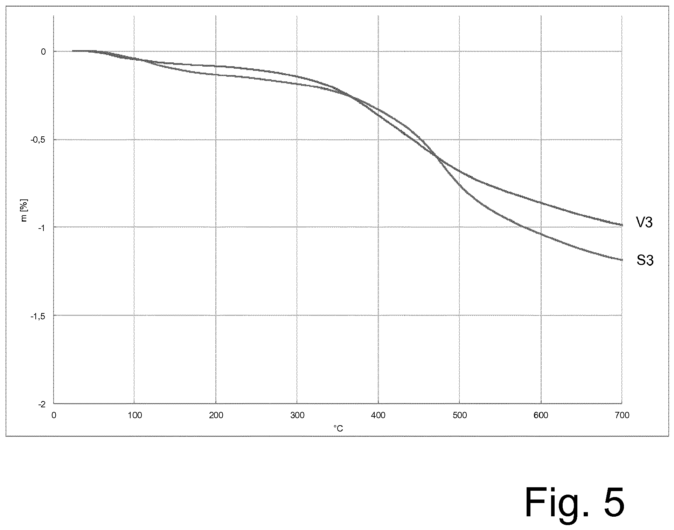

Figur 5 zeigt den mittels TGA gemessenen Gesamtgewichtsverlust der Proben der Erzeugnisse aus den Versätzen V3 und S3. Dabei ist auf der Y-Achse der Gesamtmassenverlust in Masse-% in Abhängigkeit von der Temperatur in °C gemäß X-Achse angegeben. Die Kurven bei 700 °C zeigen von oben nach unten die Werte für die aus den Versätzen V3 und S3 hergestellten Erzeugnisse. Anhand Figur 5 ist deutlich erkennbar, dass der Gesamtgewichtsverlust des aus dem erfindungsgemäßen Versatz V3 hergestellten Erzeugnisses V3 deutlich geringer ist als jener des aus nach dem Stand der Technik entsprechenden Versatz S3 hergestellten Erzeugnisses.

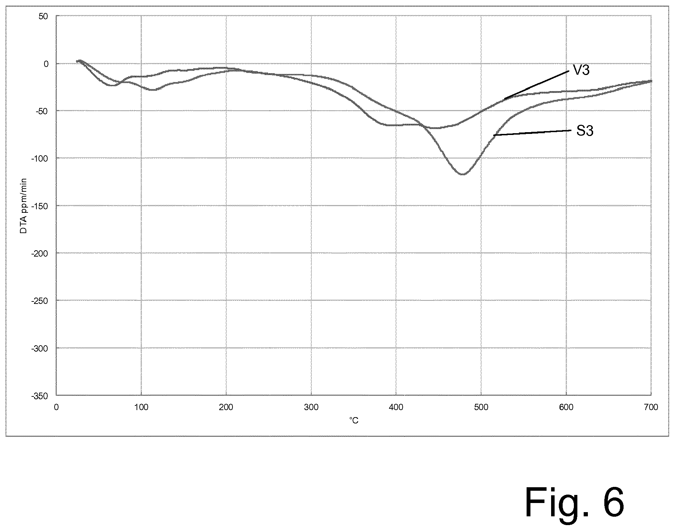

Figur 6 zeigt die aus der TGA abgeleiteten Abdampfraten der Proben der Erzeugnisse aus den Versätzen V3 und S3. Dabei ist auf der Y-Achse die Abdampfrate in ppm/min in Abhängigkeit von der Temperatur in °C gemäß X-Achse angegeben. Die Kurven bei 450 °C zeigen von oben nach unten die Werte für die aus den Versätzen V3 und S3 hergestellten Erzeugnisse. Deutlich zu erkennen sind auch hier die wesentlich geringeren Abdampfraten des aus dem erfindungsgemäßen Versatz V3 hergestellten Erzeugnisses V3 (-76 ppm) gegenüber dem Erzeugnis S3 (-120 ppm), welches aus dem Versatz nach dem Stand der Technik gemäß S3 hergestellt wurde.

Generell ist bei aus erfindungsgemäßen Versätzen hergestellten Erzeugnissen von einer maximalen Abdampfrate von weniger als 150 ppm/min auszugehen.

Für die Bestimmung der physikalischen Prüfwerte Rohdichte, Porosität und Kaltdruckfestigkeit wurden Prüfkörper der oben genannten Erzeugnisse bei 1.000°C unter Sauerstoffausschluss thermisch behandelt, um eine vollständige Carbonisierung des Bindemittels und damit eine praxisrelevante Bestimmung der Eigenschaften für den Einsatz bei hohen Temperaturen zu gewährleisten (gemäß der unten angeführten Norm). Anschließend wurden Rohdichte, Porosität und Kaltdruckfestigkeit der so erhaltenen, verkokten Prüfkörper gemäß den unten angegebenen Normen bestimmt.

Die Figuren 7, 8, 9, 10, 11 und 12 zeigen die Rohdichte, Porosität und Kaltdruckfestigkeit der nach der Verkokung erhaltenen Prüfkörper.

In Figur 7 ist die Rohdichte der aus den Erzeugnissen erhaltenen Prüfkörper dargestellt, und zwar - von links nach rechts - der Prüfkörper aus Versatz V1, S1, V2 und S2. Die Y-Achse gibt die jeweilige Rohdichte in g/cm³ an.

In Figur 8 ist die Rohdichte der aus den Erzeugnissen erhaltenen Prüfkörper dargestellt, und zwar - von links nach rechts - der Prüfkörper aus Versatz V3 und S3. Die Y-Achse gibt die jeweilige Rohdichte in g/cm³ an.

In Figur 9 ist die offene Porosität der aus den Erzeugnissen erhaltenen Prüfkörper dargestellt, und zwar - von links nach rechts - der Prüfkörper aus Versatz V1, S1, V2 und S2. Die Y-Achse gibt die jeweilige Porosität in Volumen-% an.

In Figur 10 ist die offene Porosität der aus den Erzeugnissen erhaltenen Prüfkörper dargestellt, und zwar - von links nach rechts - der Prüfkörper aus Versatz V3 und S3. Die Y-Achse gibt die jeweilige Porosität in Volumen-% an.

In Figur 11 ist die Kaltdruckfestigkeit der aus den Erzeugnissen erhaltenen Prüfkörper dargestellt, und zwar - von links nach rechts - der Prüfkörper aus Versatz V1, S1, V2 und S2. Die Y-Achse gibt die jeweilige Kaltdruckfestigkeit in N/mm² an.

In Figur 12 ist die Kaltdruckfestigkeit der aus den Erzeugnissen erhaltenen Prüfkörper dargestellt, und zwar - von links nach rechts - der Prüfkörper aus Versatz V3 und S3. Die Y-Achse gibt die jeweilige Kaltdruckfestigkeit in N/mm² an

Die Verkokung der Prüfkörper erfolgte gemäß EN 993-1:1997. Die Werte für Rohdichte und offene Porosität wurden bestimmt gemäß EN 993-1:1995 und für Kaltdruckfestigkeit gemäß EN 993-5:1998.

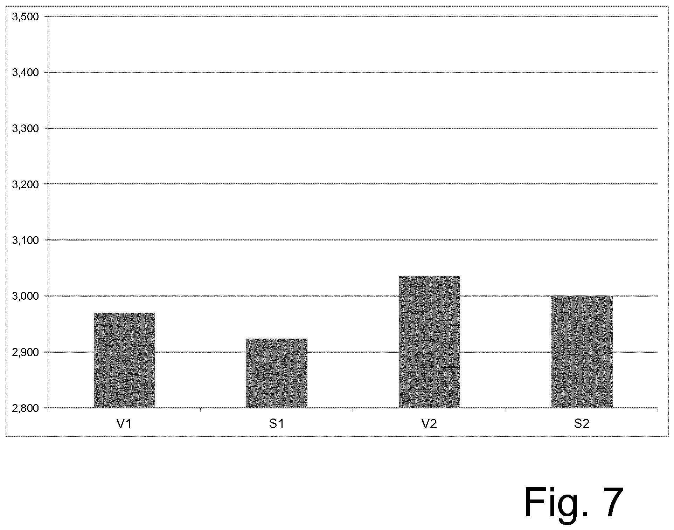

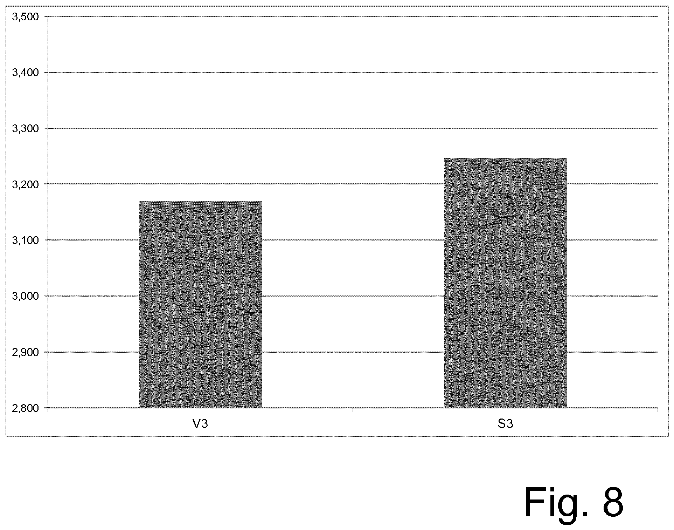

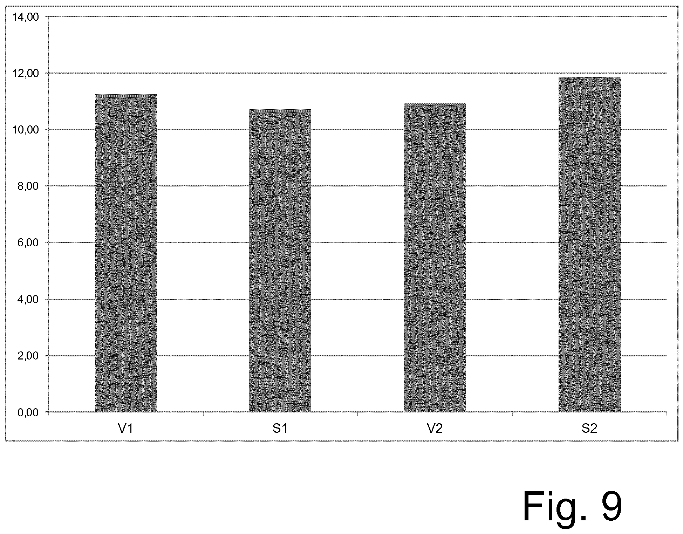

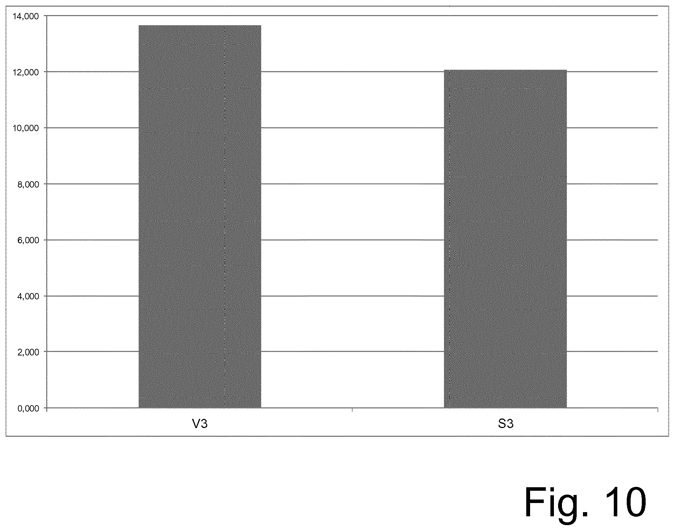

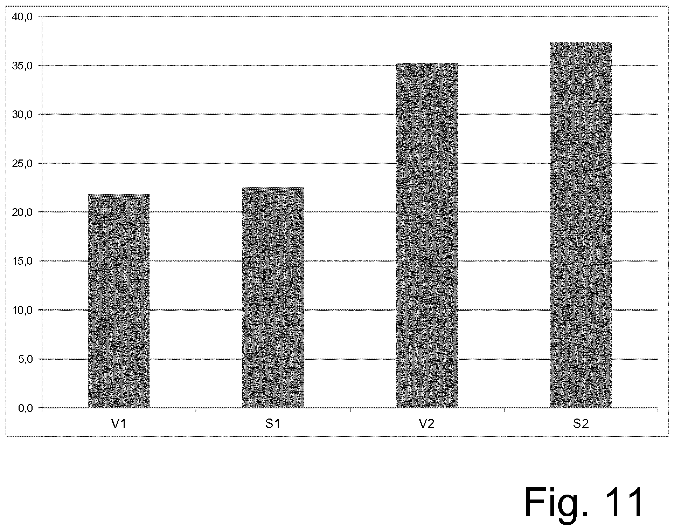

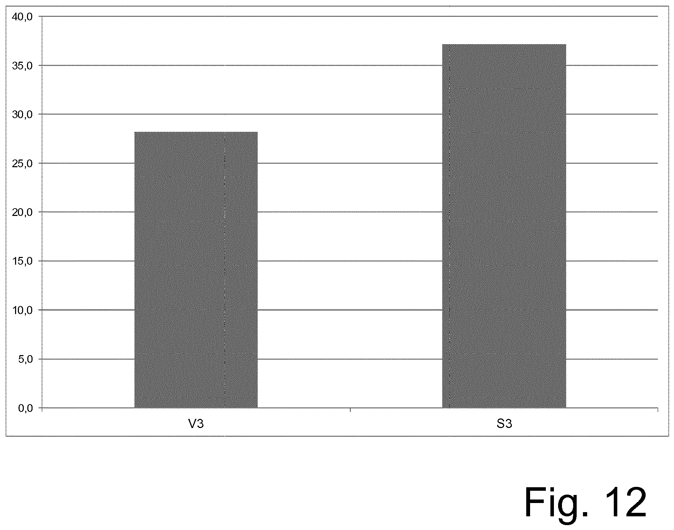

Die Figuren 7 bis 12 zeigen, dass die aus den erfindungsgemäßen Versätzen hergestellten Erzeugnisse V1, V2 und V3 hinsichtlich ihrer Eigenschaften den Erzeugnissen S1, S2 und S3, die aus Versätzen nach dem Stand der Technik hergestellt sind, teilweise überlegen, zumindest jedoch mit diesen vergleichbar sind.

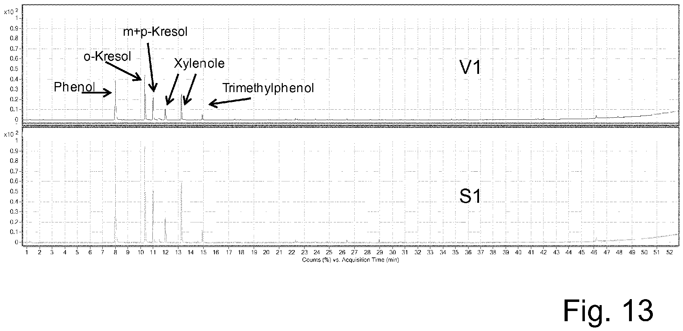

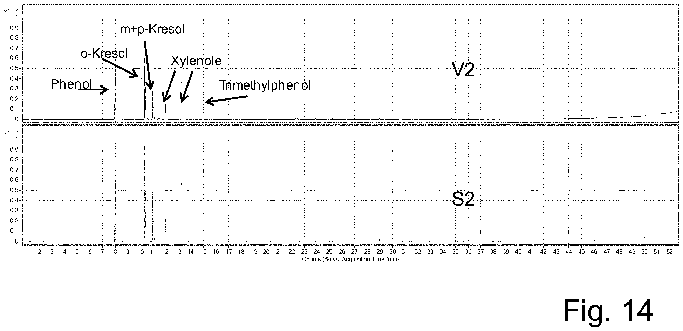

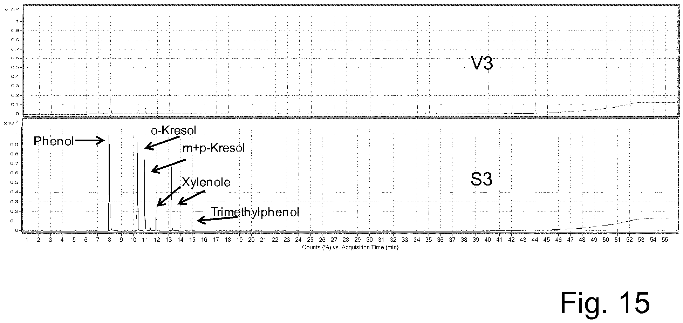

Zur Charakterisierung der beim Aufheizen der aus den Versätzen V1, V2, V3, S1, S2 und S3 hergestellten Erzeugnisse entstehenden geruchsbelästigenden oder gesundheitsgefährenden Verbindungen wurden die Erzeugnisse gaschromatographisch mittels Pyrolyse-GC-MS untersucht. Basierend auf den maximalen Abdampfraten aus der TGA wurde die Pyrolysetemperatur mit 500°C festgelegt, da im Bereich dieser Temperatur von verstärkten Emissionen aus der thermischen Zersetzung des Resolharzes beziehungsweise des Novolaks auszugehen ist. Die entsprechenden Chromatogramme sind in den Figuren 13, 14 und 15 dargestellt. Deutlich zu erkennen ist, dass bei der Pyrolyse bei dieser Temperatur nahezu ausschließlich aus der Struktur des Resols beziehungsweise des Novolaks abgeleitete Verbindungen entstehen. Dieses Verhalten ist für ein chemisch reines Resolharz beziehungsweise einen chemisch reinen Novolak typisch und für jegliche mit Resol und/oder Novolak als Bindemittel hergestellten Erzeugnisse zu erwarten. Zusätzlich ist zu erkennen, dass die emittierten Mengen an den geruchsbelästigenden oder gesundheitsgefährenden Verbindungen (Phenol, o-Kresol, m-Kresol, p-Kresol, verschiedene Xylenole, Trimethylphenol) bei den aus den erfindungsgemäßen Versätzen V1, V2 und V3 hergestellten Erzeugnissen deutlich geringer sind als bei den aus den Versätzen S1, S2 und S3 nach dem Stand der Technik.

## Patentansprüche

1. Versatz zur Herstellung eines feuerfesten kohlenstoffgebundenen Erzeugnisses, umfassend die folgenden Komponenten in den folgenden Massenanteilen, jeweils bezogen auf die Gesamtmasse des Erzeugnisses:
1.1 70 bis 97 Masse-% einer Grundkomponente;
1.2 1,0 bis 2,3 Masse-% einer Bindemittelkomponente in Form wenigstens eines Resols;
1.3 1,0 bis 3,0 Masse-% einer Bindemittelkomponente in Form wenigstens eines Pechs;
1.4 1,0 bis 28 Masse-% einer Kohlenstoffkomponente in Form wenigstens eines der folgenden Kohlenstoffträger: Graphit oder Ruß; wobei
1.5 das Massenverhältnis der Bindemittelkomponente in Form des wenigstens einen Resols zur Bindemittelkomponente in Form des wenigstens einen Pechs im Bereich von 0,5 bis 1,5 liegt.

2. Versatz nach Anspruch 1 mit einer Bindemittelkomponente in Form wenigstens eines Pechs in Form von Steinkohlenteerpech.

3. Versatz nach wenigstens einem der vorhergehenden Ansprüche mit einer Grundkomponente aus einer Magnesiakomponente oder einer Alumina-Magnesia-Komponente.

4. Versatz nach Anspruch 3 mit einer Magnesiakomponente in Form wenigstens eines der folgenden Rohstoffe auf Basis MgO: Schmelzmagnesia oder Sintermagnesia.

5. Versatz nach Anspruch 3 mit einer Alumina-Magnesia-Komponente in Form wenigstens eines der folgenden Rohstoffe auf Basis MgO oder Al₂O₃: Schmelzkorund, Sinterkorund, Bauxit, Magnesiaspinell, Sintermagnesia oder Schmelzmagnesia, wobei die Rohstoffe sowohl MgO als auch Al₂O₃ umfassen.

6. Versatz nach wenigstens einem der vorhergehenden Ansprüche mit einem Anteil an Festharz unter 0,5 Masse-%.

7. Verfahren zur Herstellung eines feuerfesten kohlenstoffgebundenen Erzeugnisses, umfassend die folgenden Schritte:
Zur Verfügungstellung eines Versatzes nach wenigstens einem der Ansprüche 1 bis 6;
Formen des Versatzes zu einem Formkörper;
Tempern des Formkörpers;
Beaufschlagung des getemperten Formkörpers mit Temperatur derart, dass der Kohlenstoff der Bindemittelkomponenten sowie der Kohlenstoffkomponente zur Ausbildung eines feuerfesten kohlenstoffgebundenen Erzeugnisses eine Kohlenstoffbindung ausbildet.

8. Feuerfestes kohlenstoffgebundenes Erzeugnis, hergestellt durch ein Verfahren nach Anspruch 7.

9. Verwendung eines feuerfesten kohlenstoffgebundenen Erzeugnisses nach Anspruch 8 zur Auskleidung von Sauerstoffblaskonvertern, Elektrolichtbogenöfen oder Stahlpfannen.

## Claims

1. A batch for the production of a refractory carbon-bonded product, comprising the following components in the following proportions by weight, respectively with respect to the total weight of the product:
1.1 70% to 97% by weight of a base component;
1.2 1.0% to 2.3% by weight of a binder component in the form of at least one resol;
1.3 1.0% to 3.0% by weight of a binder component in the form of at least one pitch;
1.4 1.0% to 28% by weight of a carbon component in the form of at least one of the following carbon sources: graphite or carbon black; wherein
1.5 the weight ratio of the binder component in the form of the at least one resol to the binder component in the form of at least one pitch is in the range 0.5 to 1.5.

2. The batch as claimed in claim 1, having a binder component in the form of at least one pitch in the form of coaltar pitch.

3. The batch as claimed in at least one of the preceding claims, having a base component formed by a magnesia component or an alumina-magnesia component.

4. The batch as claimed in claim 3, having a magnesia component in the form of at least one of the following MgO-based raw materials: fused magnesia or sintered magnesia.

5. The batch as claimed in claim 3, having an alumina-magnesia component in the form of at least one of the following MgO- or Al2O3-based raw materials: fused corundum, sintered corundum, bauxite, magnesia spinel, sintered magnesia or fused magnesia, wherein the raw materials comprise MgO as well as Al2O3.

6. The batch as claimed in at least one of the preceding claims, having a proportion of solid resin of less than 0.5% by weight.

7. A process for the production of a refractory carbon-bonded product, comprising the following steps:
providing a batch according to at least one of claims 1 to 6;
shaping the batch into a shaped article;
tempering the shaped article;
applying heat to the tempered shaped article in a manner such that the carbon of the binder components as well as of the carbon component forms a carbon bond in order to produce a refractory carbon-bonded product.

8. A refractory carbon-bonded product produced by a process as claimed in claim 7.

9. Use of a refractory carbon-bonded product as claimed in claim 8 for lining basic oxygen furnaces, electric arc furnaces or steel ladles.

## Revendications

1. Composition destinée à fabriquer un produit réfractaire à liaison carbone, comportant les composants suivants, dans les parts en masse suivantes, chaque fois rapportées à la masse totale du produit:
1.1 de 70 à 97 % en masse d'un composant de base ;
1.2 de 1,0 à 2,3 % en masse d'un composant liant sous la forme d'au moins un résol ;
1.3 de 1,0 à 3,0 % en masse d'un composant liant sous la forme d'au moins un brai ;
1.4 de 1,0 à 28 % en masse d'un composant carboné sous la forme d'au moins l'un des supports de carbone suivants : graphite ou noir de carbone ;
1.5 le rapport en masse du composant liant sous la forme de l'au moins un résol au composant liant sous la forme de l'au moins un brai se situant dans l'ordre de 0,5 à 1,5.

2. Composition selon la revendication 1 avec un composant liant sous la forme d'au moins un brai sous la forme d'un brai de goudron de houille.

3. Composition selon au moins l'une quelconque des revendications précédentes, avec un composant de base en un composant de magnésie ou un composant d'alumine-magnésie.

4. Composition selon la revendication 3, avec un composant de magnésie sous la forme d'au moins l'une des matières premières suivantes sur base de MgO : magnésie fondue ou magnésie frittée.

5. Composition selon la revendication 3, avec un composant d'alumine-magnésie sous la forme d'au moins l'une des matières premières suivantes sur base de MgO ou d'Al2O3 : corindon fondu, corindon fritté, bauxite, spinelle de magnésie, magnésie frittée ou magnésie fondue, les matières premières comprenant aussi bien du MgO qu'également de l'Al2O3.

6. Composition selon au moins l'une quelconque des revendications précédentes, avec une part de résine solide inférieure à 0,5 % en masse.

7. Procédé destiné à la fabrication d'un produit réfractaire à liaison carbone, comprenant les étapes suivantes :
de la mise à disposition d'une composition selon au moins l'une quelconque des revendications 1 à 6 ;
du façonnage de la composition en un corps moulé ;
du recuit du corps moulé ;
de l'exposition du corps moulé recuit à une température, de telle sorte que le carbone du composant liant ainsi que le carbone du composant carboné créént un composé de carbone pour former un produit réfractaire à liaison carbone.

8. Produit réfractaire à liaison carbone fabriqué par un procédé selon la revendication 7.

9. Utilisation d'un produit réfractaire à liaison carbone selon la revendication 8 pour habiller des convertisseurs à soufflage d'oxygène, des fours à arc électrique ou des poches à acier.
